# EUROPÄISCHE PATENTANMELDUNG

(11) **EP 0 542 179 A1**
(43) Veröffentlichungstag der Anmeldung: **19.05.1993**
(21) Anmeldenummer: 92119163.1
(22) Anmeldetag: 09.11.1992
(51) Int. Cl.: B01D 11/04, B01J 19/12

(54) **Verfahren zur Trennung von Stoffgemischen durch Lösungsmittelextraktion in wässrig/organischer Phase in Gegenwart von Laserstrahlung und dessen Anwendung zur Trennung von anorganischen und organischen Stoffgemischen**

(30) Priorität: 13.11.1991 LU 88031
(71) Anmelder: EUROPÄISCHE ATOMGEMEINSCHAFT (EURATOM), L-2920 Luxembourg (LU)
(72) Erfinder: Koch, Lothar, W-7504 Weingarten (DE); Apostolidis, Christos, W-6900 Heidelberg (DE); Babelot, Jean François, W-7515 Linkenheim (DE); Molinet, Roger, W-7515 Linkenheim (DE); Kehoe, Frances, Postfach 2266, W-7500 Karlsruhe 1 (DE)
(74) Vertreter: Weinmiller, Jürgen

(57) **Zusammenfassung**

Verfahren zur Trennung von anorganischen und/oder organischen Stoffgemischen durch Lösungsmittelextraktion in wäßrig/organischer Phase in Gegenwart von Laserstrahlung und dessen Anwendung zur Trennung von Lanthaniden und/oder Aktiniden.

## Beschreibung

Die Erfindung betrifft ein Verfahren zur Trennung von Stoffgemischen (sowohl anorganischen als auch organischen Stoffgemischen) durch Lösungsmittelextraktion in wäßrig/organischer Phase in Gegenwart von Laserstrahlung sowie dessen Anwendung zur Trennung von anorganischen Stoffgemischen und/oder organischen Stoffgemischen, insbesondere zur Trennung von Lanthaniden und/oder Aktiniden voneinander für die Anwendung in der Radiochemie.

Es sind bereits die verschiedensten Methoden zur Trennung von Stoffgemischen, sowohl anorganischer als auch organischer Natur, bekannt. Dazu gehören beispielsweise die fraktionierte Kristallisation, die anwendbar ist auf Stoffgemische, deren Komponenten in einem Lösungsmittel unterschiedliche Löslichkeiten aufweisen, die fraktionierte Destillation, die anwendbar ist auf Stoffgemische, deren Komponenten unterschiedliche Siedepunkte aufweisen, sowie die Flüssig-Flüssig-Extraktion, die darauf beruht, daß die Komponenten eines Stoffgemisches in unterschiedlichen Flüssigkeitsphasen unterschiedliche Löslichkeiten besitzen. Dabei entstehen Verteilungsgleichgewichte der Komponenten der zu trennenden Stoffgemische in den aneinandergrenzenden unterschiedlichen Flüssigkeitsphasen, welche die Basis für die weitere Auftrennung der Stoffgemische bilden. Weitere bekannte Methoden der Trennung von Stoffgemischen sind die Verteilungschromatographie, der Ionenaustausch und das Zonenschmelzverfahren.

Allen diesen Verfahren ist gemeinsam, daß sie technisch sehr aufwendig und auf bestimmte Anwendungsbereiche beschränkt sind, beispielsweise Stoffgemische aus kristallisierbaren Komponenten mit unterschiedlichen Schmelzpunkten, Stoffgemische aus destillierbaren Flüssigkeiten mit unterschiedlichen Siedepunkten und Stoffgemische aus Feststoffen, Flüssigkeiten oder Gasen mit unterschiedlichen Löslichkeitseigenschaften in festen oder flüssigen Extraktionsmitteln. Darüber hinaus haben diese bisher bekannten Verfahren den Nachteil, daß sie technisch sehr aufwendig sind und viele Trennungsstufen umfassen. So lassen sich beispielsweise Seltene Erden aufgrund ihrer sehr ähnlichen physikalischen und chemischen Eigenschaften nur sehr schwer durch Lösungsmittelextraktion voneinander trennen. Dabei ist beispielsweise die Extraktion ihrer anorganischen Salze aus wäßriger Lösung mit organischen Lösungsmitteln dadurch erschwert, daß die Löslichkeit der Ionen in Wasser wegen der starken elektrostatischen Wechselwirkung viel größer ist als in organischen Lösungsmitteln. Zwar kann die Löslichkeit in organischen Lösungsmitteln durch geeignete Auswahl des Anions wesentlich erhöht werden, ein davon ausgehendes Trennverfahren hat jedoch bisher keine technische Bedeutung erlangt.

Aufgabe der Erfindung war es daher, ein Verfahren zur Trennung von Stoffgemischen durch Lösungsmittelextraktion in wäßrig/organischer Phase zu finden, das auf anorganische und organische Stoffgemische anwendbar ist und die Trennung solcher Stoffgemische, insbesondere von Lanthaniden und/oder Aktiniden, auf technisch einfache und wirtschaftliche Weise erlaubt.

Es wurde gefunden, daß diese Aufgabe erfindungsgemäß dadurch gelöst werden kann, daß bei der Trennung von Stoffgemischen durch Lösungsmittelextraktion in wäßrig/organischer Phase während der Einstellung des Verteilungsgleichgewichts Laserstrahlung auf die wäßrig/organische Phase einwirken gelassen wird, deren Wellenlänge auf den Absorptionsbereich des aufzutrennenden Gemisches oder der abzutrennenden Komponente des Stoffgemisches eingestellt wird, so daß eine Anreicherung des gewünschten Produkts in der wäßrigen Phase oder in der organischen Phase über die durch das Verteilungsgleichgewicht gegebene Konzentration hinaus erfolgt.

Gegenstand der Erfindung ist ein Verfahren zur Trennung von Stoffgemischen (sowohl anorganischer als auch organischer Natur) durch Lösungsmittelextraktion in wäßrig/organischer Phase, das dadurch gekennzeichnet ist, daß man
a) eine wäßrige Lösung des zu trennenden Stoffgemisches, gegebenenfalls unter Zusatz einer Säure, vorzugsweise von HNO₃, HCl oder H₂SO₄, herstellt,
b) die erhaltene wäßrige Phase mit einem organischen Lösungsmittel, das ein geeignetes Extraktionsmittel in gelöster Form enthält, über- oder unterschichtet und die dabei erhaltenen beiden Phasen mischt bis zur Einstellung des Verteilungsgleichgewichts, wobei während des Mischens die Mischung mit Laserstrahlung, deren Wellenlänge auf die Absorption des Gemisches bzw. der abzutrennenden Komponente abgestimmt ist, bestrahlt wird, und
c) nach Abtrennung der organischen von der wäßrigen Phase das gewünschte Produkt auf an sich bekannte Weise daraus isoliert.

Nach dem erfindungsgemäßen Verfahren ist es möglich, normalerweise schwer aufzutrennende Stoffgemische sowohl anorganischer als auch organischer Natur, insbesondere auch solcher Stoffgemische, die bisher nur sehr schwer oder nicht auftrennbar waren, insbesondere Gemische von Lanthaniden und/oder Aktiniden, auf technisch einfache und zuverlässige Weise voneinander zu trennen, so daß die Komponenten dieser Gemische in Reinform erhalten und in geeigneter Weise eingesetzt werden können.

Nach dem erfindungsgemäßen Verfahren lassen sich beispielsweise Lanthaniden und/oder Aktiniden auf zuverlässige Weise voneinander trennen, so daß die dabei erhaltenen Verfahrensprodukte in der Radiochemie eingesetzt werden können.

Bevorzugte Ausgestaltungen der Erfindung ergeben sich aus den Unteransprüchen.

Bei der Durchführung des erfindungsgemäßen Verfahrens mit kontinuierlicher Laserstrahlung einer Wellenlänge, die einer Absorptionsbande des abzutrennenden Moleküls entspricht, wird dieses derart angeregt, daß das Extraktionsverhalten sich selektiv ändert und somit eine verbesserte Abtrennung von den begleitenden Substanzen erfolgt. Nach dem erfindungsgemäßen Verfahren kann die Anzahl der erforderlichen Stufen bei der Isolierung von Substanzen mit ähnlichem Extraktionsverhalten stark vermindert werden. Selbst Substanzen, die sich nicht durch Extraktion voneinander trennen lassen, können erfindungsgemäß voneinander geschieden werden. Dies ist besonders bedeutsam bei der Auftrennung von Lanthaniden und/oder Aktiniden und bei der Abtrennung der Lanthaniden von den Aktiniden.

Die Erfindung wird nachstehend an Hand der Trennung eines Gemisches von Lanthaniden, insbesondere von Praseodym und Neodym, näher erläutert, ohne jedoch darauf beschränkt zu sein.

Bei der praktischen Durchführung des erfindungsgemäßen Verfahrens wird zunächst eine wäßrige Lösung des aufzutrennenden Stoffgemisches, vorzugsweise in Gegenwart einer Säure, wie Salpetersäure, Salzsäure oder Schwefelsäure, insbesondere einer 0,25 M Säurelösung, gelöst unter Bildung einer wäßrigen Phase.

Diese wäßrige Phase wird mit einer organischen Phase, die beispielsweise besteht aus einem gesättigten oder ungesättigten Kohlenwasserstoff, Diisopropylbenzol oder Tetrachlorethan, mit einem geeigneten, darin gelösten Extraktionsmittel, wie z.B. Di-(2-ethylhexyl)phosphorsäure (HDEHP), Octyl(phenyl)-N,N-diisobutylcarbamoylmethylphosphinoxid (CMPO) oder Trialkylphosphinoxid (TRPO), insbesondere Trioctylphosphinoxid, Tributylphosphinoxid oder Triethylphosphinoxid, über- oder unterschichtet.

Nach dem Mischen der wäßrigen und organischen Phase statisch in einem Mischer unter Verwendung eines Rührmagneten, oder dynamisch in einem Zentrifugalextraktor, wird das wäßrig/organische Phasengemisch während des Durchmischens mit kontinuierlicher Laserstrahlung einer Wellenlänge bestrahlt, die einer Absorptionsbande des abzutrennenden Moleküls entspricht. Dadurch wird dieses derart angeregt, daß das Extraktionsverhalten sich selektiv ändert und somit eine verbesserte Abtrennung von den begleitenden Substanzen erfolgt.

Die bei der Durchführung des erfindungsgemäßen Verfahrens angewendete Laserstrahlung wird so ausgewählt, daß ihre Energie innerhalb des Absorptionsspektrums des aufzutrennenden Gemisches liegt. Vorzugsweise wird die Laserstrahlung abgestimmt auf die abzutrennende spezifische Substanz, wobei erfindungsgemäß auch mehrere Laser unterschiedlicher Wellenlänge verwendet werden können.

Die Dauer der Einwirkung der Laserstrahlung ist zeitlich unbegrenzt, sie erfolgt jedoch zweckmäßig nur so lange wie nötig, d.h. vorzugsweise während der Einstellung des Verteilungsgleichgewichtes zwischen der wäßrigen und der organischen Phase.

Wenn beispielsweise ein Neodym/Praseodym-Gemisch erfindungsgemäß behandelt wird unter Anwendung einer geeigneten Laserstrahlung, wird das Neodym-Molekül des Gemisches durch die Laser-Strahlung angeregt, was zur Folge hat, daß es in der wäßrigen Phase in größerem Umfang löslich ist als ohne Anregung durch die Laserstrahlung.

Nachdem sich das Verteilungsgleichgewicht zwischen der wäßrigen Phase und der organischen Phase eingestellt hat, wird das Mischen, das vorzugsweise statisch mittels eines Magnetrührers oder dynamisch mittels eines Zentrifugalextraktors durchgeführt wird, abgestoppt. Die danach erhaltenen beiden Phasen können auf an sich bekannte Weise, vorzugsweise unter Verwendung eines Scheidetrichters, durch Absaugen oder Zentrifugieren, wie im Falle des Zentrifugalextraktors, voneinander getrennt werden.

Die Gewinnung der gewünschten Komponente(n) des aufzutrennenden Stoffgemisches aus der organischen bzw. der wäßrigen Phase kann auf an sich bekannte Weise erfolgen. Durch zyklische Wiederholung des erfindungsgemäßen Verfahrens kann eine immer stärkere Anreicherung der gewünschten Komponente(n) des Stoffgemisches erzielt werden, die schließlich zur Auftrennung in die reinen Komponenten des Stoffgemisches führt.

In diesem Zusammenhang sei darauf hingewiesen, daß die bei der Durchführung des erfindungsgemäßen Verfahrens üblicherweise angewendete Temperatur Raumtemperatur ist und daß erhöhte und erniedrigte Temperaturen keinen merklichen Einfluß auf die Einstellung des Verteilungsgleichgewichtes unter dem Einfluß der Laserbestrahlung haben.

Nach dem erfindungsgemäßen Verfahren lassen sich auch Gemische von organischen Verbindungen voneinander trennen, sofern die organischen Komponenten des Stoffgemisches Absorptionsspektren aufweisen, auf welche die Laserstrahlung abgestimmt werden kann.

Bei Anwendung des erfindungsgemäßen Verfahrens auf ein Neodym/Praseodym-Gemisch wird unter der Einwirkung der Laserstrahlung beispielsweise das Neodym in der wäßrigen Phase gegenüber dem Praseodym angereichert, wodurch bei mehrfacher zyklischer Wiederholung dieses Verfahrens schließlich eine Trennung zwischen Neodym und Praseodym erzielt wird, die ohne Anwendung einer Laserstrahlung nicht erzielbar ist.

Wie bereits erwähnt, ist die anzuwendende Laserstrahlung jeweils abgestimmt auf das Absorptionsspektrum des aufzutrennenden Stoffgemisches bzw. der abzutrennenden Stoffkomponente, wobei die Absorptionsbanden im Bereich von etwa 2500 bis etwa 200 nm liegen können.

Das erfindungsgemäße Verfahren, das insbesondere in der Radiochemie anwendbar ist, erlaubt die Abtrennung der dreiwertigen Lanthaniden und der dreiwertigen Aktiniden von Uran bei der Wiederaufarbeitung von Brennstoffen für Kernreaktoren.

Die erfindungsgemäß bevorzugt verwendbaren Extraktionsmittel haben die folgenden Formeln:
HDEHP = Di-(2-ethylhexyl)phosphorsäure 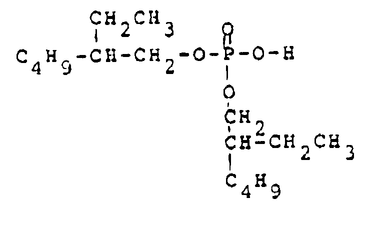
CMPO = Octyl(phenyl)-N,N-diisobutylcarbamoylmethylphosphinoxid 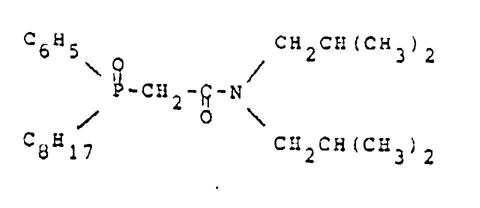
TRPO = Trialkylphosphinoxid 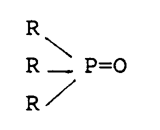
R = Alkyl
Die Erfindung wird nachstehend unter Bezugnahme auf die beiliegenden Zeichnungen und anhand einiger Beispiele näher erläutert, ohne jedoch darauf beschränkt zu sein.

Es zeigen:
- Fig. 1: eine schematische Darstellung des Ablaufs des erfindungsgemäßen Verfahrens;
- Fig. 2: den Einfluß der Wellenlänge der Laserstrahlung auf das Verteilungskoeffizientenverhältnis bei Verwendung von HDEHP in Diisopropylbenzol als organischer Phase und
- Fig. 3: den Einfluß der Wellenlänge der Laserstrahlung auf das Verteilungskoeffizientenverhältnis bei Verwendung von CMPO in Dodecan als organischer Phase.

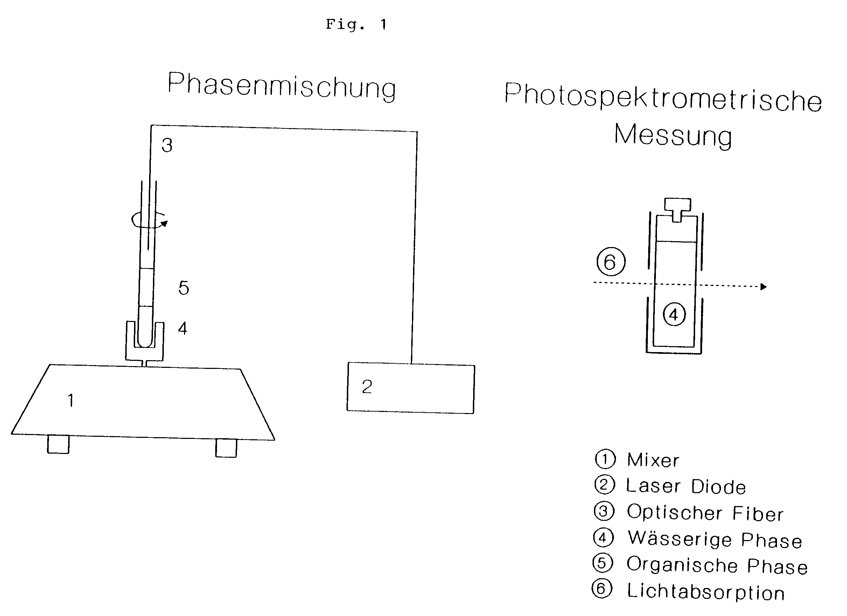

Die Fig. 1 zeigt einen einfachen Aufbau einer Batch-Extraktion gemäß der vorliegenden Erfindung, bei der Laserstrahlung während und nach der Extraktion auf das wäßrig/organische-Phasengemisch einwirken gelassen wurde und die Änderung des Nd-Extaktionskoeffizienten im Vergleich zu Praseodym (dessen Absorptionsbanden außerhalb des eingestrahlen Laserlichts lagen) gemessen wurde. Dabei wurde die Wellenlänge des Laserlichtes über ca. 1 nm verändert (Abszisse), um den Einfluß auf den Extraktionskoeffizienten zu zeigen. Der normale Extraktionskoeffizient ohne eingestrahltes Laserlicht ist als Bezugslinie angegeben.

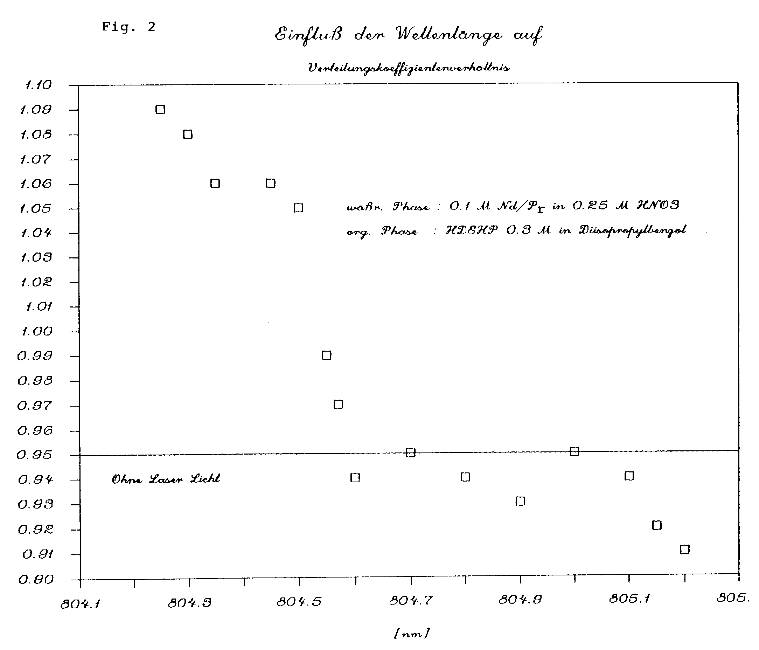

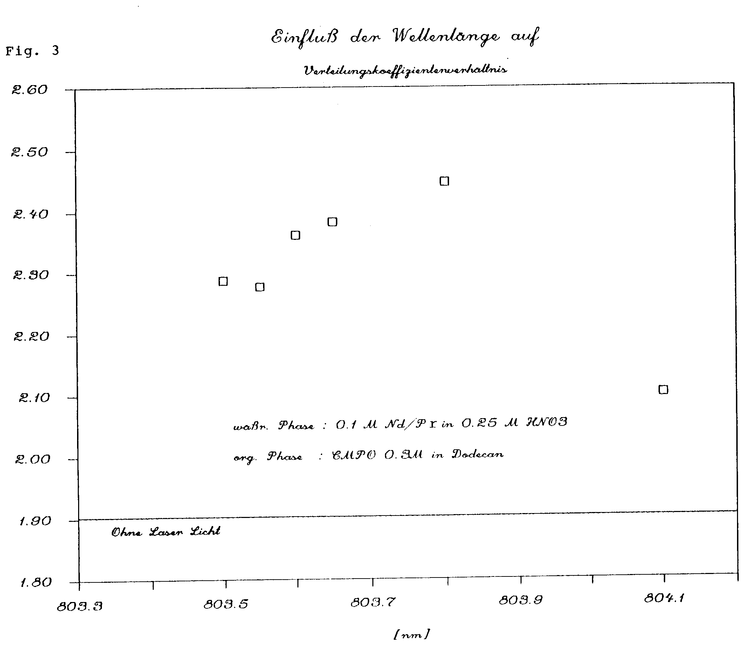

Die Versuche wurden für zwei Extraktionssysteme ausgeführt mit HDEHP (vgl. Fig. 2) und CMPO (vgl. Fig. 3). Neben der Batch-Extraktion ist der erfindungsgemäß erzielte Effekt auch für eine kontinuierliche Extraktion mit einem Zentrifugalextraktor nachweisbar.

Die Erfindung wird durch das folgende Ausführungsbeispiel näher erläutert.

### Beispiel

Ein 0,1 M Nd/Pr-Gemisch in 0,1 M HNO₃ wurde nach dem erfindungsgemäßen Verfahren aufgetrennt unter Verwendung einer organischen Phase, bestehend aus 0,3 M HDEHP in Diisopropylbenzol.

Das Konzentrations- oder Verteilungskoeffizientenverhältnis von Nd/Pr in der wäßrigen Phase ist in den folgenden Tabellen angegeben.

### Erster Versuch

| Ohne Laser | |
|---|---|
| Nd/Pr | Mittelwert mit Standardabweichung |
| 0,5611 | |
| 0,6201 | |
| 0,6130 | |
| 0,5519 | 0,5680 |
| 0,5740 | ± 0,04 |
| 0,5916 | |
| 0,5226 | |
| 0,5922 | |
| 0,5752 | |

| Mit Laser 21,0°C (804,35 nm) | |
|---|---|
| Nd/Pr | Mittelwert mit Standardabweichung |
| 0,7114 | |
| 0,6894 | 0,7085 |
| 0,6923 | ± 0,02 |
| 0,7408 | |

### Zweiter Versuch

| Ohne Laser | |
|---|---|
| Nd/Pr | Mittelwert mit Standardabweichung |
| 0,8790 | |
| 1,0037 | |
| 0,9106 | 0,9501 |
| 0,9267 | ± 0,05 |
| 0,9820 | |
| 0,9985 | |

| Mit Laser 21,0°C (804,35 nm) | |
|---|---|
| Nd/Pr | Mittelwert mit Standardabweichung |
| 1,2992 | |
| 1,1888 | 1,258 |
| 1,2410 | ± 0,03 |
| 1,3265 | |
| 1,2355 | |

Es wurde ein weiterer Versuch durchgeführt zur Auftrennung eines 0,1 M Nd/Pr-Gemisches in 0,25 M HNO₃ unter Verwendung einer organischen Phase aus 0,3 M CMPO in Dodecan.

Das dabei erzielte Konzentrations- oder Verteilungskoeffizientenverhältnis von Nd/Pr in der wäßrigen Phase war wie folgt:

### Dritter Versuch

| Ohne Laser | |
|---|---|
| Nd/Pr | Mittelwert mit Standardabweichung |
| 3,7431 | |
| 3,7549 | 3,7426 |
| 3,6950 | ± 0,03 |
| 3,7776 | |

| Mit Laser 21,0°C (804,35 nm) | |
|---|---|
| Nd/Pr | Mittelwert mit Standardabweichung |
| 4,4060 | 4,4521 |
| 4,5083 | ± 0,04 |
| 4,4420 | |

## Patentansprüche

1. Verfahren zur Trennung von Stoffgemischen durch Lösungsmittelextraktion in wäßrig/organischer Phase, dadurch **gekennzeichnet,** daß man
a) eine wäßrige Lösung des zu trennenden Stoffgemisches, gegebenenfalls unter Zusatz einer Säure, herstellt,
b) die erhaltene wäßrige Phase mit einem organischen Lösungsmittel, das ein geeignetes Extraktionsmittel in gelöster Form enthält, über- oder unterschichtet und die dabei erhaltenen beiden Phasen mischt bis zur Einstellung des Verteilungsgleichgewichts, wobei während des Mischens die Mischung mit Laserstrahlung, deren Wellenlänge auf die Absorption des Gemisches bzw. der abzutrennenden Komponente abgestimmt ist, bestrahlt wird, und
c) nach Trennung der organischen Phase von der wäßrigen Phase das gewünschte Produkt auf an sich bekannte Weise isoliert.

2. Verfahren nach Anspruch 1, dadurch gekennzeichnet, daß in der Stufe (a) als Säure Salpetersäure, Chlorwasserstoffsäure und/oder Schwefelsäure verwendet wird.

3. Verfahren nach Anspruch 1 oder 2, dadurch gekennzeichnet, daß in der Stufe (b) als organisches Lösungsmittel ein gesättigter oder ungesättigter Kohlenwasserstoff, Diisopropylbenzol oder Tetrachlorethylen verwendet wird.

4. Verfahren nach einem der Ansprüche 1 bis 3, dadurch gekennzeichnet, daß als Extraktionsmittel Di-(2-ethylhexyl)phosphorsäure (HDEHP), Octyl(phenyl)-N,N-diisobutylcarbamoylmethylphosphinoxid (CMPO) und/oder Trialkylphosphinoxid (TRPO) verwendet wird.

5. Verfahren nach einem der Ansprüche 1 bis 4, dadurch gekennzeichnet, daß das Mischen in der Stufe (b) statisch unter Verwendung eines Magnetrührers oder dynamisch unter Verwendung eines Zentrifugalextraktors durchgeführt wird.

6. Verfahren nach einem der Ansprüche 1 bis 5, dadurch gekennzeichnet, daß die Wellenlänge der Laserstrahlung so gewählt wird, daß ihre Energie innerhalb des Absorptionsspektrums des zu trennenden Stoffgemisches liegt.

7. Anwendung des Verfahrens nach einem der Ansprüche 1 bis 6 zur Trennung von anorganischen Stoffgemischen, insbesondere der Lanthaniden und/oder Aktiniden voneinander.

8. Anwendung des Verfahrens nach einem der Ansprüche 1 bis 6 zur Trennung von organischen Stoffgemischen.
